# EUROPÄISCHE PATENTSCHRIFT

(11) **EP 4 624 630 B1**
(45) Veröffentlichungstag und Bekanntmachung des Hinweises auf die Patenterteilung: **16.09.2026**
(21) Anmeldenummer: 25165949.6
(22) Anmeldetag: 25.03.2025
(51) Int. Cl.: C25B 1/04, C25B 15/08, C25B 15/021

(54) **VORRICHTUNG UND VERFAHREN ZUR HERSTELLUNG VON WASSERSTOFF**
APPARATUS AND METHOD FOR PRODUCING HYDROGEN
APPAREIL ET PROCÉDÉ DE PRODUCTION D'HYDROGÈNE

(30) Priorität: 27.03.2024 DE 102024108849
(43) Veröffentlichungstag der Anmeldung: 01.10.2025
(73) Patentinhaber: Döpke Holding GmbH, 49419 Wagenfeld (DE)
(72) Erfinder: DÖPKE, Nils, 49419 Wagenfeld (DE)
(74) Vertreter: Lenzing Gerber Stute

(56) Entgegenhaltungen:
- WO-A1-2018/130398
- WO-A1-2022/061392
- WO-A1-2025/067773

## Beschreibung

Die vorliegende Erfindung betrifft eine Vorrichtung und ein Verfahren zur Herstellung von Wasserstoff mittels Elektrolyse.

Wasserstoff ist ein idealer Energieträger und kann das Speicherproblem erneuerbarer Energien lösen: Das komprimierte Gas lässt sich zuverlässig speichern und leicht transportieren. Dieses Gas steht zu allen Tages- und Jahreszeiten zur Verfügung und ist in großen Mengen vorhanden. Da Wasserstoff nicht wassergefährdend ist, kann er auch in Trinkwasserschutzgebieten zum Einsatz kommen. Durch den Einsatz von Wasserstoff entstehen keine direkten lokalen CO2-Emissionen, sondern nur Wasserdampf. Man kann mit ihm heizen, Strom erzeugen und Auto fahren. Durch diese vielfältigen Anwendungsmöglichkeiten trägt Wasserstoff zu einer klimaneutralen Energieversorgung bei und kann eine wichtige Rolle im künftigen Energiesystem einnehmen.

Das Gas Wasserstoff ist in allen Verbrauchssektoren einsetzbar und bietet viele Potenziale:
Produziert aus Wind- und Sonnenstrom macht Wasserstoff regenerative Energien langfristig speicherbar und löst damit ein Kernproblem der Energiewende.

Eingesetzt in Gas-Kraftwerken kann Wasserstoff Dunkelflauten ausgleichen, das Stromnetz stützen und den Ausbau der regenerativen Energien vorantreiben. Als zweite Säule stärkt Wasserstoff so die Resilienz des gesamten Energiesystems.

In Reinform oder in Form von Derivaten liefert Wasserstoff wichtige Grundstoffe für die Industrie, schafft Möglichkeiten zum Energieträgerwechsel in vielen Produktionsprozessen und schafft als Energielösung neben Strom zusätzliche Sicherheit.

Als E-Fuel oder Antriebsenergie für Brennstoffzellen ist Wasserstoff eine klimaneutrale Antriebsalternative für Schwerlastverkehr, Schiffe oder Flugzeuge.

Als Heizenergie bietet Wasserstoff eine CO2-neutrale Option für eine Vielzahl bestehender Immobilien, in denen sich Wärmepumpen nur technisch schwierig und ökonomisch unvorteilhaft einsetzen lassen.

Transportieren lässt sich Wasserstoff mittels Pipelines oder Schiffen oder über bereits vorhandene Gas-Infrastruktur.

Zur Herstellung von Wasserstoff im industriellen Maßstab gibt es verschiedene Verfahren. Eine in der Industrie gängige Methode ist die Dampfreformierung, bei der Erdgas in Wasserstoff und Kohlenstoffdioxid aufgespalten wird. Das bei der Herstellung anfallende CO2 wird mit Hilfe der Carbon Capture and Storage-Technologie (CCS) gespeichert und unterirdisch gelagert. Der so hergestellte blaue Wasserstoff ist nahezu klimaneutral.

Ein anderer Weg zur Wasserstoffherstellung ist die Pyrolyse. Aus Methan werden CO2-armer Wasserstoff und fester Kohlenstoff, ein in der Industrie genutzter Rohstoff, erzeugt.

Klimaneutraler Wasserstoff kann auch durch Elektrolyse produziert werden. Beim Power-to-Gas-Verfahren wird mithilfe von erneuerbarem Strom Wasser in grünen Wasserstoff und Sauerstoff zerlegt.

Eine große Herausforderung der Energiewende ist die volatile Einspeisung von regenerativ erzeugtem Strom. Schon heute ist regional mehr Elektrizität vorhanden, als das Stromnetz aufnehmen kann. Die Folge: Windparks müssen kurzfristig abgeregelt werden. Diese Zeiten eignen sich besonders gut für die Produktion von grünem Wasserstoff: Statt den Strom aus Wind und Sonne abzuregeln, wird er zur Produktion von grünem Wasserstoff genutzt, der dann in das Gas-Netz eingespeist werden kann.

Die Herstellung von grünem Wasserstoff erfolgt durch die Power-to-Gas-Technologie. Wasser (H2O) wird in Elektrolyseuren durch eine elektrische Spannung in Wasserstoff (H2) und Sauerstoff (O2) aufgespalten. Wird für die Elektrolyse Strom aus erneuerbaren Quellen verwendet, werden keine Treibhausgase bei der Erzeugung von Wasserstoff ausgestoßen, er ist also CO2-frei und wird dann grüner Wasserstoff genannt.

Problematisch ist, dass für die Verwendung von Elektrolyseuren entmineralisiertes Trinkwasser benötigt wird. Dieses ist jedoch in der Regel am Standort von Stromerzeugungsanlagen, wie z.B. Photovoltaik- oder Windkraftanlagen, nicht vorhanden. Um mittels Elektrolyseure direkt, d.h. in unmittelbarer Nähe und somit quasi im Inselbetrieb, bei den Stromerzeugungsanlagen Wasserstoff herzustellen, wird somit zusätzlich eine Anlage zur Herstellung von Wasser benötigt. Derartige Trinkwasseranlagen sind vielfältig bekannt.

Zum einen könnte, sofern überhaupt möglich, mittels Brunnen direkt am Ort der Stromerzeugungsanlagen Wasser gefördert und anschließend für den Elektrolyseur aufgearbeitet werden. Grundwasser ist jedoch eine knappe Ressource und das Abpumpen führt zu einer nicht erwünschten Senkung des Grundwasserspiegels.

Ferner existieren Trinkwassererzeugungsanlagen, welche die Luftfeuchtigkeit nutzen, um Trinkwasser herzustellen. Siehe zum Beispiel die Anlage in WO2018130398. Nachteilig bei diesen Anlagen ist, dass hierfür die verwendete Umgebungsluft in der Regel aufgewärmt werden muss, was zu einem erhöhten Energieverbrauch und schlechten Wirkungsgrad führt und diese auch kein entmineralisiertes Trinkwasser liefern.

Aufgabe der vorliegenden Erfindung ist es daher, eine Vorrichtung und ein Verfahren zur Erzeugung von Wasserstoff bereitzustellen, dessen Wirkungsgrad hoch ist und kein Trink- oder Grundwasser benötigt.

Diese Aufgabe wird erfindungsgemäß mit einer Vorrichtung nach Anspruch 1 und einem Verfahren nach Anspruch 8 gelöst. Vorteilhafte Ausbildungen der Erfindung ergeben sich durch die Merkmale der abhängigen Patentansprüche.

Die erfindungsgemäße Vorrichtung und das erfindungsgemäße Verfahren zeichnen sich vorteilhaft dadurch aus, dass sie auf bereits bekannte Komponenten und zum Teil abgewandelte bekannte Komponenten zurückgreift und diese so miteinander kombiniert, dass eine sehr effektive Wasserstoffproduktion möglich ist, ohne dass auf vor Ort bestehende Trinkwasserressourcen zurückgegriffen oder entmineralisiertes Wasser zur Anlage hin transportiert werden muss. Gerade bei großen Windparks entstehen hohe Kosten für einen Wasseranschluss und dem großen Verbrauch an Trinkwasser.

Die Erfindung sieht daher vor, das benötigte Wasser vor Ort und damit dezentral aus der Umgebungsluft zur gewinnen.

Dabei wird vorteilhaft auf eine das Kondensationsverfahren verwendende Anlage zurückgegriffen, die zur Trinkwasserherstellung genutzt wird. Diese weist stets eine Mineralisierungseinheit auf, welche bei der erfindungsgemäßen Vorrichtung gerade nicht verwendet wird. Mittels dieser Anlage wird das für die Elektrolyse benötigte Reinstwasser aus der Umgebungsluft hergestellt und dem nachgeschalteten Elektrolyseur zugeleitet. Durch die Kombination des Elektrolyseurs mit der Wasserherstellungsanlage wird laut Anspruch 1 die bei der Elektrolyse entstehende Abwärme zum Aufwärmen der Umgebungsluft genutzt werden, wodurch der Wirkungsgrad der Gesamtanlage verbessert wird.

Der bei der Elektrolyse entstehende Wasserstoff und Sauerstoff wird jeweils in getrennten Behältnissen gespeichert oder über Rohre weitertransportiert oder auch Verflüssigungsanlagen zugeführt.

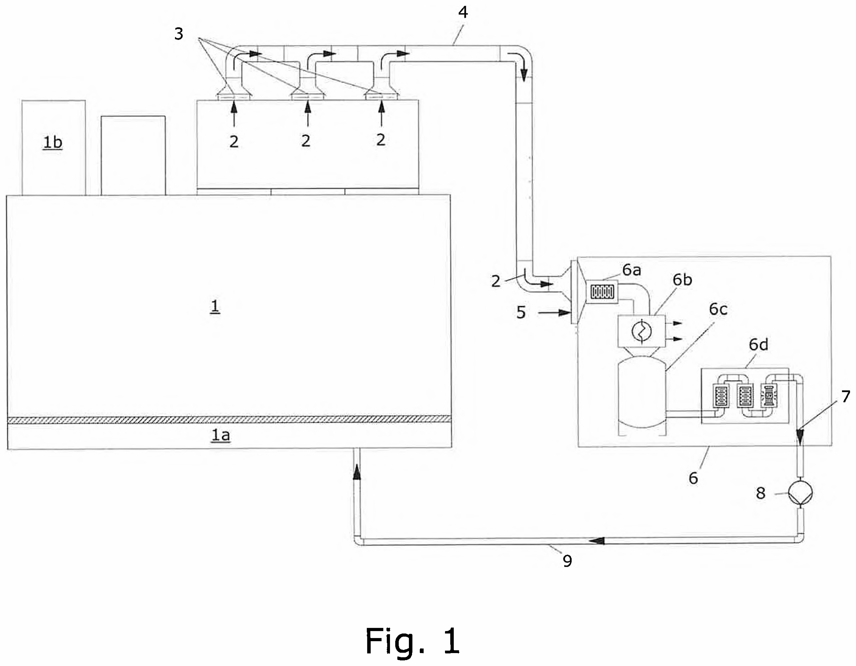

Nachfolgend wird die Erfindung anhand einer in Figur 1 beispielhaft dargestellten Vorrichtung näher erläutert.

Die Figur 1 zeigt die erfindungsgemäße Anlage und Vorrichtung zur Herstellung von Wasserstoff, bestehend aus einer Wasserherstellungsvorrichtung 6, die mit Hilfe des Kondensationsverfahrens aus der Umgebungsluft 5 Wasser herstellt, welches der nachgeschaltete Elektrolyseur 1 zur Herstellung von Wasserstoff und Sauerstoff direkt verwenden kann. Die bei der Elektrolyse entstehende Abwärme 2 wird zum Aufwärmen bzw. Vorwärmen von Umgebungsluft genutzt. Dabei kann die Abwärme unmittelbar zum Aufheizen der Umgebungsluft genutzt werden. In Kombination kann auch die über die abgeführte Abwärme 2 erzeugte warme Luft mit Umgebungsluft gemischt werden, um diese aufzuwärmen.

Im einfachsten Fall wird somit die warme Abluft 2 mit der Umgebungsluft 5 gemischt bzw. vermengt und dann der Wassererzeugungseinrichtung 6 zugeführt, wie es in Figur 1 dargestellt ist. Vorteilhaft wird die warme Abluft 2 mittels der bereits vorhandenen Abwärmelüfter 3 durch eine Rohrleitung 4 hin zur Wassererzeugungsvorrichtung 6 geleitet.

Die so erwärmte feuchte Umgebungsluft wird dann zunächst durch einen Filter 6a geleitet, um danach gereinigt einem Wärmetauscher 6b, in dem der Kondensationsprozess stattfindet, zuzuführen. Der Filter 6a weist vorteilhaft eine Filtergröße von ein bis zweieinhalb Mikrometer auf, so dass Verunreinigungen nicht zum nachgeschalteten Wärmetauscher 6b gelangen.

Der Wärmetauscher besteht bevorzugt aus Polymeren, da Metall das Wasser verunreinigen würde.

Mit dem vorbeschriebenen Prozess können ca. fünf Liter Wasser mit einer Kilowattstunde Strom produziert werden. Für einen Liter Wasser wird somit nur 0,2 Kilowattstunden Strom benötigt. Das gewonnene Wasser wird dann zunächst in einem Puffertank 6c zwischengelagert, um danach durch mehrere nachgeordnete Filter 6d geleitet zu werden, damit keine Bakterien oder Schadstoffe mehr im Wasser enthalten sind. Das Kondensationsverfahren arbeitet ab 20% Luftfeuchtigkeit und 15°C Umgebungstemperatur wirtschaftlich.

Das so gewonnene Speisewasser muss nicht weiter aufbereitet werden, bevor es dem Elektrolyseur 1 zugeführt wird, so dass sichergestellt ist, dass kein Wasser mit der falschen Reinheit verwendet wird und der Elektrolyseur 1 nicht verschmutzt oder beschädigt und seine Leistung und Lebensdauer nachteilig beeinträchtigt wird.

Das von der Wassererzeugungsvorrichtung 6 gewonnene Wasser wird mittels einer Pumpe 8 und über eine Leitung 9 zu dem Wassertank 1a des Elektrolyseurs geleitet und wird von dort dem Elektrolyseprozess zugeführt. Der mittels der Elektrolyse erzeugte Wasserstoff und Sauerstoff kann jeweils in Tanks zwischengelagert werden. Der Wassertank kann auch getrennt vom Elektrolyseur angeordnet und über eine Leitung mit diesem verbunden sein.

Selbstverständlich müssen der Elektrolyseur 1 und die Wassererzeugungsvorrichtung 6 nicht in unmittelbarer Nähe zueinander angeordnet sein. Die Leitungen 4 und 9 können im Prinzip beliebig lang ausgeführt sein. Dabei ist jedoch auf eine hinreichend gute Wärmeisolierung der Leitung 4 zu achten.

Die erfindungsgemäße Wasserstoffherstellungsanlage kann sowohl mittels Solarstrom und/oder aus Windenergie erzeugtem Strom betrieben werden.

## Patentansprüche

1. Vorrichtung zur Herstellung von Wasserstoff mittels eines Elektrolyseurs (1), **dadurch gekennzeichnet, dass** dem Elektrolyseur (1) Wasser aus einer Wassererzeugungsvorrichtung (6) zugeführt wird, wobei die Wassererzeugungsvorrichtung (6) ein Mittel zum Entziehen und Verflüssigen der Feuchtigkeit der Umgebungsluft (5) in Form eines Wärmetauschers aufweist, der die Feuchtigkeit der Umgebungsluft kondensieren lässt, wobei die Energie der Abwärme (2) des Elektrolyseurs (1) der Umgebungsluft (5) vor dem Feuchtigkeitsentzug zugeführt wird, um diese zu erwärmen, wobei dies durch Vermengen der warmen Abluft (2) des Elektrolyseurs (1) mit der Umgebungsluft (5) erfolgt.

2. Vorrichtung nach Anspruch 1, **dadurch gekennzeichnet, dass** die Vorrichtung mindestens einen Speicher (1a) zur Lagerung des gewonnenen Wasserstoffs aufweist.

3. Vorrichtung nach Anspruch 2, **dadurch gekennzeichnet, dass** die Vorrichtung zusätzlich mindestens einen Speicher (1b) zur Lagerung des gewonnenen Sauerstoffs aufweist.

4. Vorrichtung nach Anspruch 1 oder 2, **dadurch gekennzeichnet, dass** die Vorrichtung Filter (6a) aufweist, mittels der die feuchte Umgebungsluft (5) gereinigt wird.

5. Vorrichtung nach einem der vorhergehenden Ansprüche, **dadurch gekennzeichnet, dass** die Wassererzeugungsvorrichtung (6) eine Vorrichtung (6d) zum Abtöten von Keimen und/oder Bakterien im erzeugten Wasser aufweist.

6. Vorrichtung nach Anspruch 4, **dadurch gekennzeichnet, dass** die Vorrichtung (6d) zum Abtöten von Keimen und/oder Bakterien im erzeugten Wasser ein Aktivfilter oder eine UV-Bestrahlungseinrichtung ist.

7. Vorrichtung nach einem der vorhergehenden Ansprüche, **dadurch gekennzeichnet, dass** mindestens ein Abwärmelüfter (3) des Elektrolyseurs (1) zum Transport der warmen Abluft (2) hin zur Wassererzeugungsvorrichtung (6) dient.

8. Verfahren zur Herstellung von Wasserstoff mittels eines Elektrolyseurs (1), **dadurch gekennzeichnet, dass** dem Elektrolyseur (1) Wasser aus einer Wassererzeugungsvorrichtung (6) zugeführt wird, wobei die Wassererzeugungsvorrichtung (6) einen Wärmetauscher bzw. Kondensator (6b) aufweist, mittels dem sie der Umgebungsluft (5) mittels eines Kondensationsprozesses die Feuchtigkeit entzieht und diese zu flüssigem Wasser umwandelt, wobei die Energie der Abwärme (2) des Elektrolyseurs (1) der Umgebungsluft (5) zugeführt wird, um diese zu erwärmen, bevor die feuchte aufgewärmte Umgebungsluft der Wassererzeugungsvorrichtung 6 zugeführt wird.

9. Verfahren nach Anspruch 8, **dadurch gekennzeichnet, dass** das Verfahren mit einer Vorrichtung nach einem der Ansprüche 1 bis 4 durchgeführt wird.

10. Verfahren nach Anspruch 9, **dadurch gekennzeichnet, dass** die Vorrichtung mit mittels Photovoltaik- und/oder aus Windenergieanlagen hergestelltem Strom betrieben wird.

11. Verfahren nach einem der Ansprüche 8 bis 10, **dadurch gekennzeichnet, dass** in der Wassererzeugungsvorrichtung (6) innerhalb der Vorrichtung (6d) keine Mineralisierung des Nutzwassers erfolgt und damit der Elektrolyseur (1) nicht verschmutzt oder beschädigt und seine Leistung nachteilig beeinträchtigt wird

## Claims

1. Apparatus for producing hydrogen by means of an electrolyser (1), **characterised in that** water is supplied to the electrolyser (1) from a water-generating device (6), wherein the water-generating device (6) comprises a means for extracting and liquefying moisture from the ambient air (5) in the form of a heat exchanger which causes the moisture in the ambient air to condense, wherein the energy from the waste heat (2) from the electrolyser (1) is supplied to the ambient air (5) prior to the extraction of moisture in order to heat it, this being achieved by mixing the warm exhaust air (2) from the electrolyser (1) with the ambient air (5).

2. A device according to claim 1, **characterised in that** the device comprises at least one storage tank (1a) for storing the hydrogen produced.

3. A device according to claim 2, **characterised in that** the device additionally comprises at least one storage tank (1b) for storing the oxygen produced.

4. A device according to claim 1 or 2, **characterised in that** the device comprises filters (6a) by means of which the humid ambient air (5) is purified.

5. A device according to any of the preceding claims, **characterised in that** the water-generating device (6) comprises a device (6d) for killing germs and/or bacteria in the generated water.

6. A device according to claim 4, **characterised in that** the device (6d) for killing germs and/or bacteria in the produced water is an activated filter or a UV irradiation device.

7. A device according to any one of the preceding claims, **characterised in that** at least one waste heat fan (3) of the electrolyser (1) serves to transport the warm exhaust air (2) towards the water-generating device (6).

8. A method for producing hydrogen using an electrolyser (1), **characterised in that** water is supplied to the electrolyser (1) from a water-generating device (6), wherein the water-generating device (6) comprises a heat exchanger or condenser (6b) by means of which it extracts moisture from the ambient air (5) by means of a condensation process and converts it into liquid water, whereby the energy from the waste heat (2) of the electrolyser (1) is supplied to the ambient air (5) to heat it before the humid, heated ambient air is supplied to the water-generating device (6).

9. A method according to claim 8, **characterised in that** the method is carried out using a device according to any one of claims 1 to 4.

10. The method according to claim 9, **characterised in that** the device is operated using electricity generated by photovoltaic and/or wind power plants.

11. A method according to any one of claims 8 to 10, **characterised in that** no mineralisation of the process water takes place in the water-generating device (6) within the apparatus (6d), and thus the electrolyser (1) is not contaminated or damaged and its performance is not adversely affected.

## Revendications

1. Dispositif pour la production d'hydrogène au moyen d'un électrolyseur (1), **caractérisé en ce que** l'électrolyseur (1) est alimenté en eau provenant d'un dispositif de production d'eau (6), le dispositif de production d'eau (6) comprenant un moyen d'extraction et de liquéfaction de l'humidité de l'air ambiant (5) sous la forme d'un échangeur thermique, qui permet de condenser l'humidité de l'air ambiant, l'énergie de la chaleur résiduelle (2) de l'électrolyseur (1) étant alimentée à l'air ambiant (5) avant l'extraction de l'humidité afin de le chauffer, ceci étant réalisé par le mélange de l'air évacué chaud (2) de l'électrolyseur (1) avec l'air ambiant (5).

2. Dispositif selon la revendication 1, **caractérisé en ce que** le dispositif comprend au moins un réservoir (1a) pour le stockage de l'hydrogène produit.

3. Dispositif selon la revendication 2, **caractérisé en ce que** le dispositif comprend en outre au moins un réservoir (1b) pour le stockage de l'oxygène produit.

4. Dispositif selon la revendication 1 ou 2, **caractérisé en ce que** le dispositif comprend des filtres (6a), au moyen desquels l'air ambiant humide (5) est purifié.

5. Dispositif selon l'une des revendications précédentes, **caractérisé en ce que** le dispositif de production d'eau (6) comprend un dispositif (6d) pour l'élimination des germes et/ou des bactéries dans l'eau produite.

6. Dispositif selon la revendication 4, **caractérisé en ce que** le dispositif (6d) pour l'élimination des germes et/ou des bactéries dans l'eau produite est un filtre actif ou un dispositif d'irradiation UV.

7. Dispositif selon l'une des revendications précédentes, **caractérisé en ce qu'**au moins un ventilateur de chaleur résiduelle (3) de l'électrolyseur (1) sert au transport de l'air évacué chaud (2) vers le dispositif de production d'eau (6).

8. Procédé pour la production d'hydrogène au moyen d'un électrolyseur (1), **caractérisé en ce que** l'électrolyseur (1) est alimenté en eau provenant d'un dispositif de production d'eau (6), le dispositif de production d'eau (6) comprenant un échangeur thermique ou condenseur (6b), au moyen duquel il extrait l'humidité de l'air ambiant (5) au moyen d'un processus de condensation et la transforme en eau liquide, l'énergie de la chaleur résiduelle (2) de l'électrolyseur (1) étant alimentée à l'air ambiant (5) pour le chauffer, avant que l'air ambiant humide chauffé soit alimenté au dispositif de production d'eau (6).

9. Procédé selon la revendication 8, **caractérisé en ce que** le procédé est réalisé avec un dispositif selon l'une des revendications 1 à 4.

10. Procédé selon la revendication 9, **caractérisé en ce que** le dispositif est exploité avec de l'électricité produite au moyen de photovoltaïque et/ou provenant d'installations éoliennes.

11. Procédé selon l'une des revendications 8 à 10, **caractérisé en ce que** dans le dispositif de production d'eau (6), à l'intérieur du dispositif (6d), il n'y a pas de minéralisation de l'eau d'utilisation et ainsi l'électrolyseur (1) n'est pas encrassé ou endommagé et sa performance est affectée négativement.
